# EUROPEAN PATENT SPECIFICATION

(11) **EP 2 450 771 B1**
(45) Date of publication and mention of the grant of the patent: **08.05.2019**
(21) Application number: 11187353.5
(22) Date of filing: 31.10.2011
(51) Int. Cl.: G06F 1/16

(54) **Touch screen display assembly**
Berührungsbildschirmanzeigenanordnung
Ensemble d'affichage d'écran tactile

(30) Priority: 03.11.2010 US 939025
(43) Date of publication of application: 09.05.2012
(73) Proprietor: Honeywell International Inc., Morris Plains, NJ 07950 (US)
(72) Inventor: Suddreth, John G., Morristown, NJ New Jersey 07962-2245 (US); Harris, Douglas J., Morristown, NJ New Jersey 07962-2245 (US)
(74) Representative: Houghton, Mark Phillip

(56) References cited:
- EP-A1- 2 220 994
- DE-A1-102004 031 659
- US-A1- 2001 024 945
- US-A1- 2008 232 049

## Description

### TECHNICAL FIELD

The present invention generally relates to a display assembly and more particularly relates to a touch screen display assembly.

### BACKGROUND

Touch screen displays are display screens that are configured to detect one or more touch events or gestures on their surface. Touch screen displays are increasingly replacing traditional control mechanisms such as buttons, dials and switches to control commanded systems. One area where touch screen displays are increasingly being utilized is in vehicles to control various subsystems of those vehicles. For instance, touch screen displays may be used in an automobile to control a navigation system and in aircraft, a touch screen display may be used to control communication systems, navigation systems, flight control systems, etc.

One concern surrounding the use of a touch screen display to control a system onboard a moving vehicle is the possibility that unanticipated motion of the vehicle (for instance, motion caused by air turbulence, rough roads, etc.), may result in unintended relative motion between an operator's finger and the touch sensitive screen of the touch screen display. This, in turn, could result in an unintended and undesired control input into the commanded system.

To address this concern, touch screen display manufacturers and others have traditionally provided a hand rest positioned adjacent a bottom side of the display screen of the touch screen display. This solution has proven adequate for applications where the display screen of the touch screen display is relatively small compared with the hand of the operator. However, this solution may not be adequate when the display screen is relatively large because, in such applications, an operator may need to lift his or her hand off of the hand rest to reach remote portions of the display screen.

US2008/232049A1 discloses a connecting device for detachably holding an electronic apparatus having a housing formed in a plate shape and serving as an interface for a signal input/output between the electronic apparatus and at least one external device. The connecting device includes a base portion and a support plate coupled with the base portion. The device includes a connector that can be provided on the surface of the support plate and to which the signal input/output terminal is connected and a guide member that is supported by the lower end of the support plate so as to freely turn in the direction of moving close to and away from the support plate with the lower end as the axis and that is in contact with both of a part of the lower end surface and a part of the back surface of the electronic apparatus when the electronic apparatus is attached.

EP2220994A1 discloses a medical device that measures a condition of a living body and in which a recess is formed on the exterior (first and second surfaces) of its casing. An anti-slip member is attached to the inside of the recess. Moreover, another recess is provided inside the recess. The recess is formed such that an end of the recess protrudes from the anti-slip member when the anti-slip member is attached to the inside of the recess. In the case where a display screen that displays a measurement result is provided on the casing, it is preferable that the first and second surfaces are adjacent to a third surface on which the display screen is provided.

US2001/024945A1 discloses a portable telephone to which additional function units, such as a flip unit and a slide unit, that provide additional functions for the main body of a portable telephone, are mounted on the case of a basic unit that includes only the essential units required for speech. One or more of an LCD bezel, a flip cover, a keypad bezel, grips, a keypad slide cover and a slide cover, which are additional function units, are mounted on a basic unit.

DE102004031659A1 discloses a control for motor vehicle e.g. land vehicle, that has touch screen for optical representation of information and for input of commands, the screen being round in shape. The unit has a touch screen for input of commands by touching the screen or by pressing on the screen. Six control buttons are provided at an edge of the screen, where the buttons form a closed ring around the screen. A circular rotating unit has a width of 10 to 30 millimeters and is arranged around the buttons.

### BRIEF SUMMARY

The present invention provides a touch screen display assembly according to claim 1 of the appended claims.

A touch screen display assembly is disclosed herein.

In an embodiment, the touch screen display assembly includes, but is not limited to, a touch sensitive screen, a bezel that at least partly frames the touch sensitive screen, and a stabilizing member that is connected to the bezel and disposed proximate the touch sensitive screen. The stabilizing member is configured to stabilize a hand of an operator at a plurality of positions around a periphery of the touch sensitive screen when the operator interacts with the touch sensitive screen.

In an example useful for understanding the invention, the touch screen display assembly includes, but is not limited to, a touch sensitive screen and a bezel that frames the touch sensitive screen. The bezel includes an integral stabilizing feature that is configured to stabilize a hand of an operator at a plurality of positions around a periphery of the touch sensitive screen when the operator interacts with the touch sensitive screen.

In another example useful for understanding the invention, the touch screen display assembly includes, but is not limited to, a touch sensitive screen and a bezel that frames the touch sensitive screen. The bezel is configured to mount the touch sensitive screen to a mounting surface and is further configured to support the touch sensitive screen in a spaced apart relationship with the mounting surface to form a recess between an under side of the bezel and the mounting surface and thereby permit an operator to wrap a finger of a hand around and behind the bezel to stabilize the hand of the operator at a plurality of positions around a periphery of the touch sensitive screen when the operator interacts with the touch sensitive screen.

### BRIEF DESCRIPTION OF THE DRAWINGS

The present invention will hereinafter be described in conjunction with the following drawing figures, wherein like numerals denote like elements, and
FIG. 1 is a fragmentary perspective view illustrating the inside of aircraft cockpit;
FIG. 2 is an expanded fragmentary perspective view illustrating a portion of an instrument panel shown in FIG. 1 including a touch screen display;
FIG. 3 is an expanded fragmentary perspective view similar to FIG. 2 illustrating a stabilizing member being assembled to the touch screen display;
FIG. 4 is an expanded fragmentary perspective view similar to FIG. 2 illustrating an embodiment of a touch screen display assembly made in accordance with the teachings of the present disclosure;
FIG. 5 is a fragmentary schematic cross-sectional view of a portion of an example useful for understanding the invention, of the touch screen display assembly of FIG. 4;
FIG. 6 is a fragmentary schematic cross-sectional view of a portion of an example useful for understanding the invention, of the touch screen display assembly of FIG. 4;
FIG. 7 is a fragmentary schematic cross-sectional view of a portion of another example useful for understanding the invention, of the touch screen display assembly of FIG. 4;
FIG. 8 is a fragmentary schematic cross-sectional view of a portion of another example useful for understanding the invention, of the touch screen display assembly of FIG. 4;
FIG. 9 is a fragmentary schematic cross-sectional view of a portion of another example useful for understanding the invention, of the touch screen display assembly of FIG. 4;
FIG. 10 is a fragmentary schematic cross-sectional view of a portion of another example useful for understanding the invention, of the touch screen display assembly of FIG. 4;
FIG. 11 is a fragmentary schematic cross-sectional view of a portion of another example useful for understanding the invention, of the touch screen display assembly of FIG. 4;
FIG. 12 is a fragmentary schematic cross-sectional view of a portion of an embodiment of the touch screen display assembly of FIG. 4;
FIG. 13 is a plan view of the embodiment of the touch screen display assembly illustrated in FIG. 12;
FIG. 14 is a fragmentary schematic cross-sectional view of a portion of another example useful for understanding the invention, of the touch screen display assembly of FIG. 4;
FIG. 15 is a plan view of the example of the touch screen display assembly illustrated in FIG. 14;
FIG. 16 is a fragmentary schematic cross-sectional view of a portion of another example useful for understanding the invention, of a touch screen display assembly ; and
FIG. 17 is a fragmentary cross-sectional view of a portion of yet another example useful for understanding the invention, of a touch screen display assembly.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

An improved touch screen display assembly is disclosed herein that permits an operator to anchor their hand at various locations around a periphery of the touch screen display assembly while interacting with the touch sensitive screen. The touch screen display assembly includes one or more anchor points that allow an operator to grasp, grip, grab, hold, and/or otherwise engage the touch screen display assembly in a manner that allows the operator to stabilize one or more fingers of his or her hand with respect to the touch screen display assembly. Once the operator's fingers are stabilized with respect to the touch screen display assembly, the operator can substantially eliminate relative motion between the operator's hand and the touch screen display assembly. In this manner, the operator may interact with, and accurately actuate desired control options displayed on the touch sensitive screen even while the vehicle is operating in a turbulent environment. A further understanding of the various embodiments of the touch screen display assembly disclosed herein may be obtained through a review of the illustrations accompanying this application together with a review of the detailed description that follows.

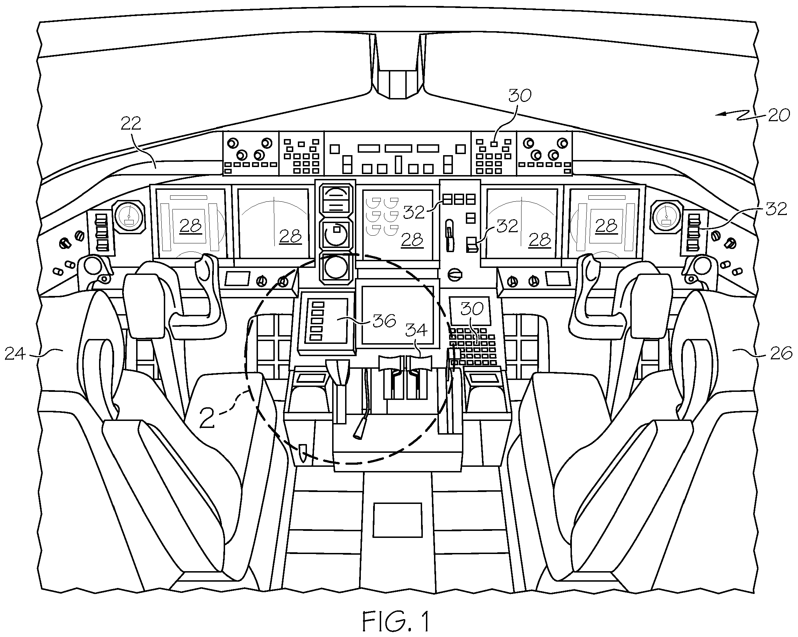

FIG. 1 is a fragmentary perspective view illustrating the inside of an exemplary aircraft cockpit 20. Although the context of the following discussion is with respect to touch screen display assemblies used in aircraft, it should be understood that the teachings herein pertain to touch screen display assemblies used in any type of vehicle including, but not limited to, land based vehicles such as automobiles and trains as well as watercraft and spacecraft. Additionally, the teachings herein are not limited to vehicle applications. Rather, the teachings herein may also be used together with touch screen displays that are employed in stationary applications such as information kiosks and automatic teller machines as well as with touch screen displays that are hand held or otherwise not mounted to a surface.

Aircraft cockpit 20 includes an instrument panel 22 positioned to be accessible from a pilot seat 24 and a copilot seat 26. Instrument panel 22 includes various readouts 28 and various control features such as buttons 30, switches 32, and throttle controls 34. Also mounted on instrument panel 22 is a touch screen display 36. Touch screen displays are well known and are disclosed in US patents nos. 3,662,105 and 4,286,289. Touch screen display 36 may be configured to provide control inputs into one or more commanded systems. For example, touch screen display 36 may be configured to control landing gear deployment, flight control surface actuation, and radio and navigation system operations.

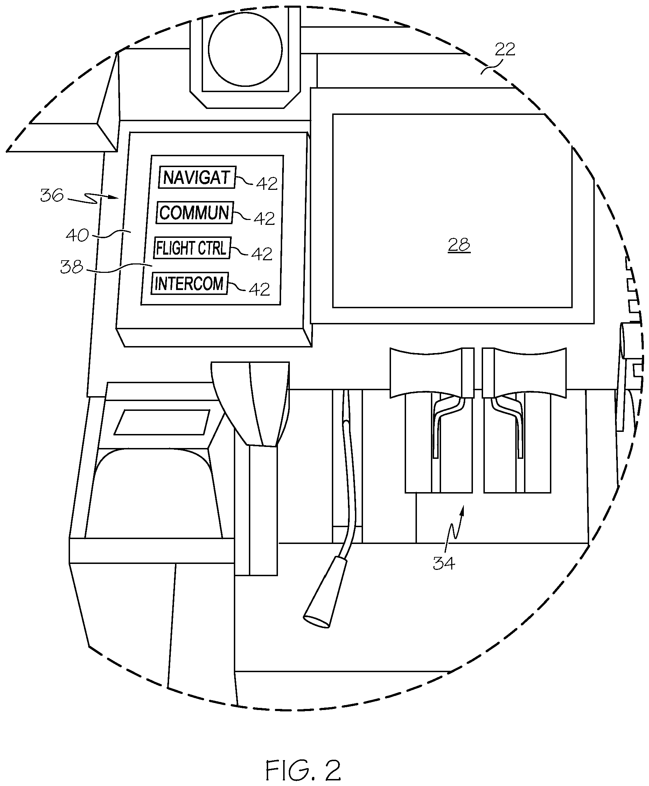

FIG. 2 is an expanded fragmentary perspective view illustrating the portion of instrument panel 22 shown in FIG. 1 that is encircled by the dashed line and annotated with the letter "A", which includes touch screen display 36. Touch screen display 36 includes a touch sensitive screen 38 surrounded or framed entirely or in part by bezel 40. Touch sensitive screen 38 may employ any of a variety of touch sensitive technologies that enable touch sensitive screen 38 to detect an actuating interaction by an operator either on or near a surface of touch sensitive screen 38. Such actuating interaction may be carried through the use of a finger, a stylus, a laser, a light pen, and/or any other device that the operator uses to either physically contact the surface of touch sensitive screen 38, that the operator positions in close proximity to the surface of touch sensitive screen 38, or that the operator direct towards the surface of touch sensitive screen 38. Graphic and/or text based images 42 are depicted on touch sensitive screen 38. These graphic and/or text based images 42 correspond with control inputs, commands, and/or other inputs required by the commanded system. An operator provides such input to the commanded system by touching touch sensitive screen 38 at a location where a desired graphic and/or text based image 42 is displayed. Touch sensitive screen 38 registers the touch and transmits the command to the commanded system. Bezel 40 houses touch sensitive screen 38 and may also mount touch sensitive screen 38 to instrument panel 22.

Touch sensitive screen 38 commonly includes a glass window, a plexiglass window, or other transparent material at an outer periphery to interface with, and to receive touches initiated by the operator. Bezel 40 commonly comprises a metal or plastic material. Consequently, touch sensitive screen 38 and bezel 40 commonly provide relatively slippery surfaces (i.e., they each have relatively low coefficients of static friction) and, consequently, are not well suited for serving as an anchor point for an operator's hand.

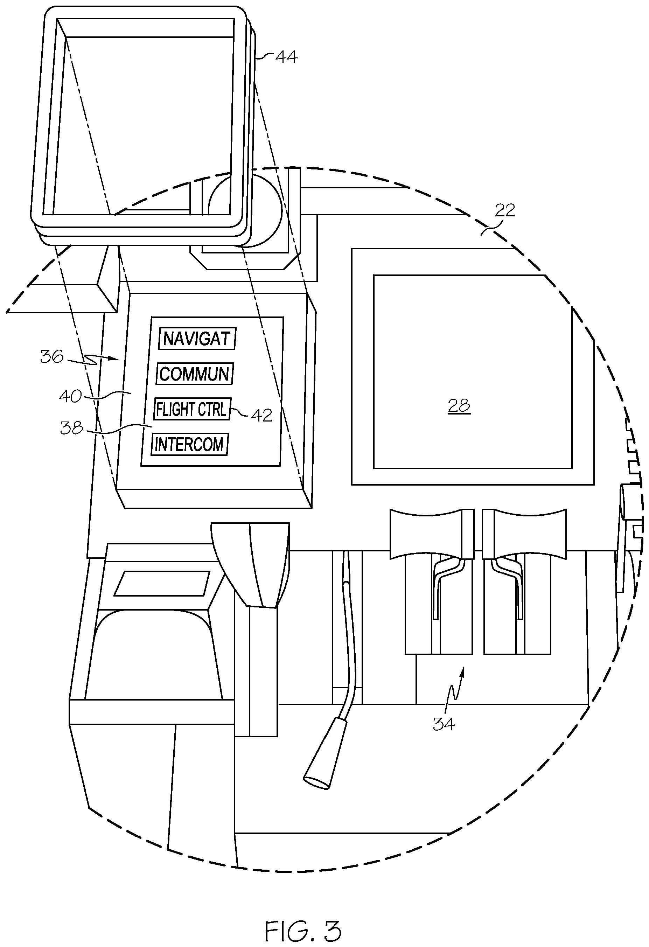

FIG. 3 is an expanded fragmentary perspective view similar to FIG. 2 illustrating a stabilizing member 44 being assembled to touch screen display 36. In the illustrated embodiment, stabilizing member 44 is configured to fit around, and substantially surround (frame) a periphery of, bezel 40. In some embodiments, a friction or interference fit may be employed when assembling stabilizing member 44 to touch screen display 36. In other embodiments, stabilizing member 44 may be affixed to bezel 40 or to instrument panel 22 through the use of mechanical fasteners and/or adhesives. In other examples useful for understanding the invention, as discussed below, stabilizing member 44 may not comprise a separate component, but rather, may be integrated into bezel 40. In still examples useful for understanding the invention, stabilizing member 44 may surround or be positioned adjacent to only a portion of bezel 40. For example, in some examples, stabilizing member 44 may be positioned adjacent to only a top portion of bezel 40 (i.e., the portion that is the most remote from pilot seat 24 and copilot seat 26). In yet other embodiments, multiple stabilizing members 44 may be positioned at multiple locations around the bezel 40.

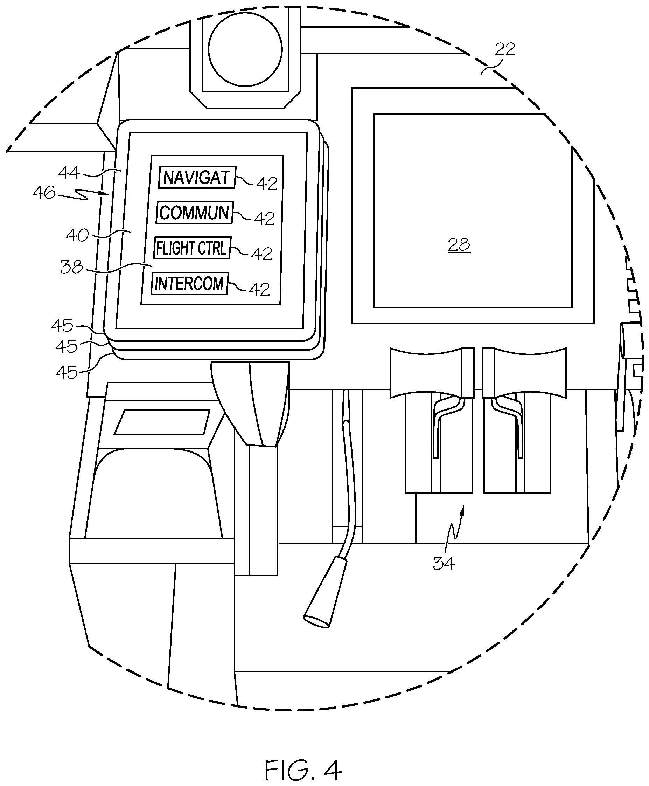

Stabilizing member 44 may comprise any suitable material. In some embodiments, such as the one illustrated in FIG. 4, stabilizing member 44 has contours and surface features which are configured to enhance an operator's ability to grasp, grab, the grip or otherwise engage stabilizing member 44. In other embodiments, stabilizing member 44 may comprise a material having a coefficient of static friction that exceeds the coefficient of static friction of bezel 40 and of a surface of touch sensitive screen 38. The use of such materials may enable an operator to press one or more fingers of their hand against stabilizing member 44 whereby the elevated level of friction would allow the operator to stabilize his or her hand at a location where their fingers contact stabilizing member 44. Such materials include, but are not limited to, rubber, polymeric materials, and foam or other compressible materials. In still other embodiments, stabilizing member 44 may include contours and surface features which enhance an operator's ability to engage stabilizing member 44 and may also comprise materials having an elevated level of friction.

FIG. 4 is an expanded fragmentary perspective view similar to FIG. 2 illustrating an embodiment of a touch screen display assembly 46 made in accordance with the teachings of the present disclosure. As illustrated, stabilizing member 44 substantially surrounds (frames) a periphery of bezel 40 and is substantially stationary with respect to bezel 40. An operator may anchor their hand to touch screen display assembly 46 by placing one or more fingers of their hand on stabilizing member 44. Then, while keeping those fingers engaged with stabilizing member 44, the operator may use one or more additional fingers to interact with touch sensitive screen 38. The connection between the operator's fingers and stabilizing member 44 permits the operator to synchronize movement of the operator's hand with any movement experienced by touch screen display assembly 46. For instance, if touch screen display assembly 46 rises or falls suddenly because of turbulence experienced by the aircraft, the connection between the operator's fingers and stabilizing member 44 will cause the operator's hand to also rise or fall in a manner that corresponds with the rise and fall of touch screen display assembly 46. Accordingly, there is substantially no relative movement between the operator's hand and touch screen display assembly 46 as a result of turbulence, road conditions, etc. and this permits the operator to accurately select a desired graphic and/or text based image 42 without any disruption due to turbulence or other motion related disturbances.

As illustrated in FIG. 4, stabilizing member 44 includes multiple ribs 45 arranged adjacent to one another and extending in parallel fashion along an exterior surface around an entire periphery of stabilizing member 44. Because ribs 45 extend around an entire periphery of stabilizing member 44, they allow an operator to grasp touch screen display assembly 46 from substantially any position/orientation with respect to touch screen display assembly 46. In other words, and with continuing reference to FIG. 1, a pilot sitting in pilot seat 24 could use his right hand to engage ribs 45 situated on the right side of touch screen display assembly 46 and a copilot sitting in copilot seat 26 could use with his left hand to engage ribs 45 situated on the left side of touch screen display assembly 46. Although ribs 45 have been illustrated as the anchoring feature in FIG. 4, it should be understood that many different contours, surface features, and combinations thereof may be employed to allow an operator to anchor their hand to touch screen display assembly 46. Many of these different contours, surface features, and combinations thereof are discussed below.

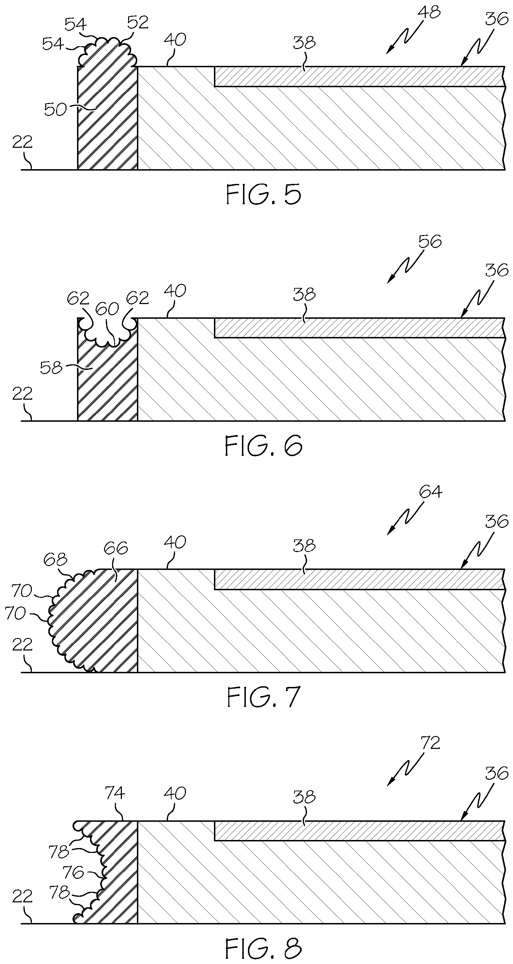

FIG. 5 is a fragmentary schematic cross-sectional view of a portion of an example of a touch screen display assembly 48. In the illustrated example a stabilizing member 50 has been assembled to touch screen display 36. Stabilizing member 50 includes a raised surface 52 that protrudes above a surface of touch sensitive screen 38 (from the perspective of FIG. 5) and that extends in a direction that is substantially parallel to bezel 40. A plurality of ribs 54 are defined in raised surface 52. In the illustrated example ribs 54 extended along raised surface 52 in a direction that is substantially parallel to bezel 40 (i.e., ribs 54 and raised surface 52 extend in a direction that is perpendicular to the plane of FIG. 5). In some examples, ribs 54 will be generally parallel to their respective adjacent portions of bezel 40 at all locations around a bezel 40 while in other embodiments, ribs 54 may be perpendicular to bezel 40 or may be oriented at any other desired angle. In other examples, raised surface 52 may not include ribs 54, but rather, may be generally smooth. In other examples, an upper surface of stabilizing member 50 may not include raised surface 52 but rather, may be generally flat and co-planner with the upper surfaces of touch sensitive screen 38 and bezel 40. In such examples, ribs 54 may be defined in the generally flat upper surface of stabilizing member 50 to provide surface features that allow an operator to grip and anchor their hand to touch screen display assembly 48.

FIG. 6 is a fragmentary schematic cross-sectional view of a portion of an alternate example of a touch screen display assembly 56. In the illustrated example a stabilizing member 58 has been assembled to touch screen display 36. Stabilizing member 58 includes a depressed surface 60 that recedes below a surface of touch sensitive screen 38 (from the perspective of FIG. 6) and that extends in a direction that is substantially parallel to bezel 40. In the illustrated example depressed surface 60 is contoured to conform to an operator's fingertips and thereby provide the operator with the location around the perimeter of bezel 40 that the operator can grasp onto. In other examples, any desired contour may be employed. A plurality of ribs 62 are defined in depressed surface 60. In the illustrated example, ribs 62 extended along depressed surface 60 in a direction that is substantially parallel to bezel 40 (i.e., ribs 62 and depressed surface 60 extend in a direction that is perpendicular to the plane of FIG. 6). In some examples, ribs 62 will be generally parallel to their respective adjacent portions of bezel 40 at all locations around a bezel 40 while in other examples, ribs 62 may be perpendicular to bezel 40 or may be oriented at any other desired angle. In other embodiments, depressed surface 60 may not include ribs 62, but rather, may be generally smooth.

FIG. 7 is a fragmentary schematic cross-sectional view of a portion of another alternate example of a touch screen display assembly 64. In the illustrated embodiment, a stabilizing member 66 has been assembled to touch screen display 36. Stabilizing member 66 includes a protruding surface 68 that is oriented generally transverse to an upper surface of touch sensitive screen 38 (from the perspective of FIG 7), that protrudes in a direction away from touch sensitive screen 38, and that extends in a direction that is substantially parallel to bezel 40. In the illustrated example, protruding surface 68 is contoured to permit an operator's fingers to grasp onto it. A plurality of ribs 70 are defined in protruding surface 68. In the illustrated embodiment, ribs 70 extended along a protruding surface 68 in a direction that is substantially parallel to bezel 40 (i.e., ribs 70 and protruding surface 68 extend in a direction that is perpendicular to the plane of FIG. 6). In some examples, ribs 70 will be generally parallel to their respective adjacent portions of bezel 40 at all locations around a bezel 40 while in other embodiments, ribs 70 may be perpendicular to bezel 40 or may be oriented at any other desired angle. In other examples, protruding surface 68 may not include ribs 70 but rather, may be generally smooth.

FIG. 8 is a fragmentary schematic cross-sectional view of a portion of another example embodiment of a touch screen display assembly 72. In the illustrated example a stabilizing member 74 has been assembled to touch screen display 36. Stabilizing member 74 includes a depressed surface 76 that is oriented generally transversely to touch sensitive screen 38 (from the perspective of FIG. 8), that is depressed inwardly, in a direction towards touch screen display 36, and that extends in a direction that is substantially parallel to bezel 40. In the illustrated example depressed surface 76 is contoured to conform to an operator's fingertips and thereby provide the operator with a location around the perimeter of bezel 40 that the operator can grasp onto. In other examples, any desired contour may be employed. A plurality of ribs 78 are defined in depressed surface 76. In the illustrated example, ribs 78 extended along depressed surface 60 in a direction that is substantially parallel to 26 (i.e., ribs 78 and depressed surface 76 extend in a direction that is perpendicular to the plane of FIG. 8). In some examples, ribs 78 will be generally parallel to their respective adjacent portions of bezel 40 at all locations around a bezel 40 while in other embodiments, ribs 78 may be perpendicular to bezel 40 or may be oriented at any other desired angle. In other examples, depressed surface 76 may not include ribs 70, but rather, may be generally smooth.

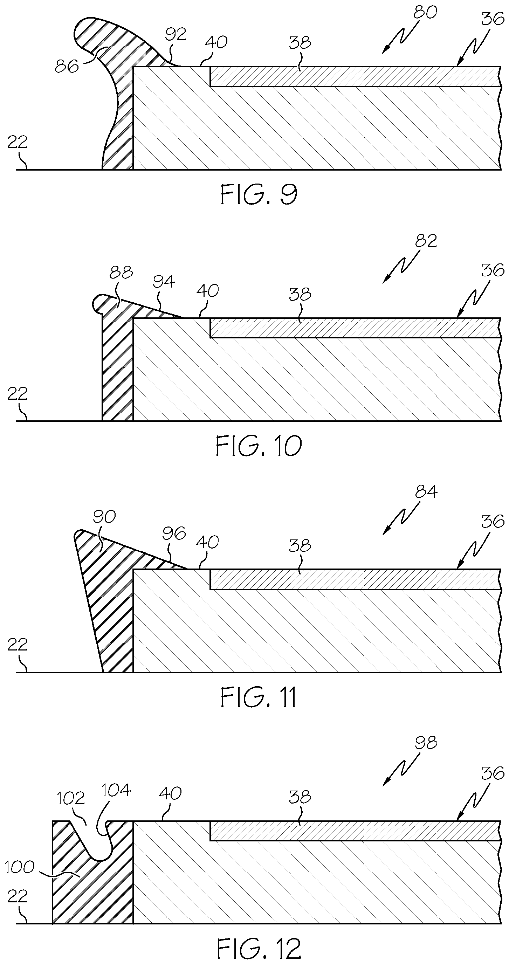

FIGS. 9 - 11 are fragmentary schematic cross-sectional views of a portion of alternate examples of touch screen display assemblies. FIG. 9 illustrates touch screen display assembly 80, FIG. 10 illustrates touch screen display assembly 82, and FIG. 11 illustrates touch screen display assembly 84. Touch screen display assembly 80 includes a stabilizing member 86, touch screen display assembly 82 includes a stabilizing member 88, and touch screen display assembly 84 includes stabilizing member 92. Stabilizing members 86, 88 and 92 are each variations of an example where the stabilizing member has a generally hooked cross-sectional contour that extends in an upward direction above a surface of touch sensitive screen 38 (from the perspective of FIGS. 9-11) and a that also extends in an outward direction, away from touch sensitive screen 38. This upward and outward extension forms an overhang that provides an operator with a location around the perimeter of bezel 40 that the operator can grasp on to. It should be understood that the cross-sectional contours depicted in FIGS. 9-11 are merely exemplary in nature and that in other examples, any desired configuration having a generally hooked cross-sectional contour that forms an overhang may be employed without a parting from the teachings herein. In still other examples, ribs or other surface features may be disposed on the surface of stabilizing members 86, 88 and 90 to provide added grip.

Stabilizing member 86 includes a bezel engaging region 92, stabilizing member 88 includes a bezel engaging region 94, and stabilizing member 90 includes a bezel engaging region 96. Bezel engaging regions 92, 94 and 96 are the portions of stabilizing members 86, 88, and 90 that are most proximate to, and that come into contact with, an upward facing surface of bezel 40 (from the perspective of FIGS. 9-11). Bezel engaging regions 92, 94, and 96 are also disposed in close proximity to touch sensitive screen 38. For this reason, bezel engaging regions 92, 94, and 96 are contoured to have relatively wide, obtuse angles with respect to the upper surface of touch sensitive screen 38. In some examples, it may be desirable to ensure that the angle is not less than 135 degrees. By giving bezel engaging regions 92, 94, and 96 wide, obtuse angles with respect to the upper surface of touch sensitive screen 38, it is less likely that there will be any interference between the bezel engaging regions and the operator's finger as the operator interacts with touch sensitive screen 38. This configuration has the advantage of providing anchor points for an operator' s hand relatively close to touch sensitive screen 38 without interfering with the operator's ability to interact with touch sensitive screen 38.

FIG. 12 is a fragmentary schematic cross-sectional view of a portion of an embodiment of a touch screen display assembly 98. In the illustrated embodiment, a stabilizing member 100 has been assembled to touch screen display 36. Stabilizing member 100 includes a recessed finger anchor 102. With continuing reference to FIG. 6, recessed finger anchor 102 differs from depressed surface 60. Depressed surface 60 extends along a length of stabilizing member 58. Recessed finger anchor 102 does not extend through stabilizing member 100 but rather is configured to accommodate a single fingertip. An operator may insert their finger into recessed finger anchor 102 and rest their fingertip on fingertip receiving wall 104, and thereby anchor their hand to touch screen display assembly 98. The operator may then use their free fingers or thumb to interact with touch sensitive screen 38. Multiple recessed finger anchors 102 may be spaced apart around the periphery of the stabilizing member 100.

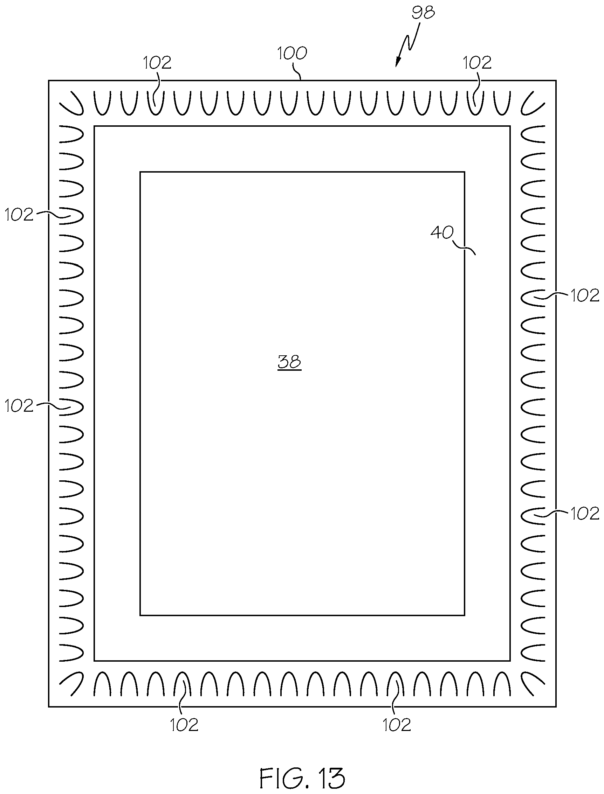

FIG. 13 is a plan view of touch screen display assembly 98. In the illustrated embodiment, multiple recessed finger anchors 102 are disposed around stabilizing member 100. In the illustrated embodiment, recessed finger anchors 102 are positioned relatively close to one another. This configuration permits an operator to anchor multiple fingers at once to stabilizing member 100 to provide a robust anchoring engagement between the operator's hand and stabilizing member 100. By providing multiple recessed finger anchors 102 at multiple locations around the periphery of touch sensitive screen 38, the operator is presented with the ability to anchor their hand to touch screen display assembly 98 from various angles and positions. In other examples, recessed finger anchors 102 may be defined in only a portion of stabilizing member 100 as opposed to around its entire periphery.

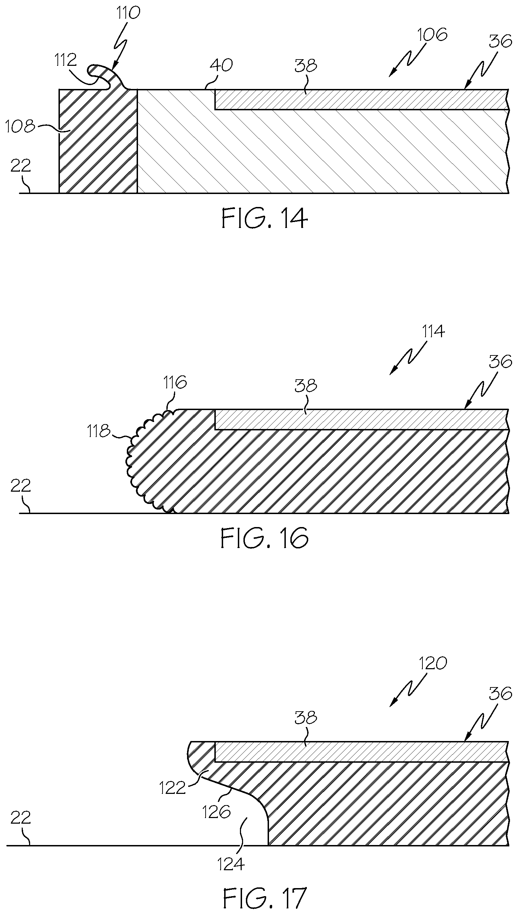

FIG. 14 is a fragmentary schematic cross-sectional view of a portion of another alternate example of a touch screen display assembly 106. In the illustrated example, a stabilizing member 108 has been assembled to touch screen display 36. Stabilizing member 108 includes a raised finger anchor 110. With continuing reference to FIG. 12, raised finger anchor 110 differs from recessed finger anchor 102. While recessed finger anchor 102 is recessed below an upper surface of stabilizing member 100, raised finger anchor 110 projects outwardly from an upper surface of stabilizing member 108. Similar to recessed finger anchor 102, raised finger anchor 110 is also configured to accommodate a single fingertip. An operator may insert their finger into raised finger anchor 110 and rest their fingertip on fingertip receiving wall 112, and thereby anchor their hand to touch screen display assembly 106. The operator may then use their free fingers or thumb to interact with touch sensitive screen 38.

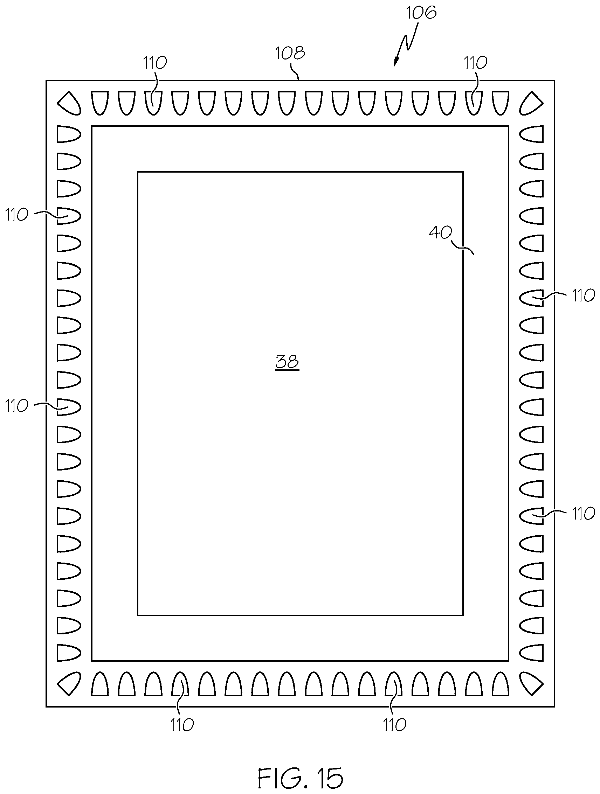

FIG. 15 is a plan view of touch screen display assembly 106. In the illustrated example, multiple raised finger anchors 110 are disposed around stabilizing member 108. In the illustrated example, raised finger anchors 110 are positioned relatively close to one another. This configuration permits an operator to anchor multiple fingers at once to stabilizing member 108 to provide a robust anchoring engagement between the operator's hand and stabilizing member 108. By providing multiple raised finger anchors 110 at multiple locations around the periphery of touch sensitive screen 38, the operator is presented with the ability to anchor their hand to touch screen display assembly 106 from various angles and positions. In other examples, raised finger anchors 110 may be defined in only a portion of stabilizing member 108 as opposed to around its entire periphery.

The anchoring features described above and shown in FIGS. 4-15 are not an exhaustive disclosure of anchoring features that could be implemented on a stabilizing member. Other features may also be employed. For example, the ribs (ribs 45) disclosed in FIG. 4 could be modified from having rounded edges to having sharp or squared off edges. In another example, surface features may be disposed along the outer periphery of the stabilizing member that provided texture similar to that of sandpaper. In still other examples, rather than using a plurality of parallel ribs, a single rib forming a lip at an edge of the stabilizing member may be employed. In still another embodiment, the periphery of the stabilizing member may have a checkerboard-type pattern is of surfaces at different elevations, thereby forming a surface having multiple recessed pockets. Many additional textures, contours, surface features, and combinations thereof may also be employed.

FIG. 16 is a fragmentary schematic cross-sectional view of a portion of another example of a touch screen display assembly 114. Touch screen display assembly 114 includes touch sensitive screen 38, and bezel 116. Bezel 116 frames touch screen display assembly 114 and mounts touch screen display assembly 114 to instrument panel 22. Unlike the various embodiments of the touch screen display assemblies described above, touch screen display assembly 114 does not include a stabilizing member. Rather, bezel 116 includes a stabilizing feature 118 that is integral with bezel 116. In the example illustrated in FIG. 16, stabilizing feature 118 is a series of aligned ribs extending in a direction perpendicular to the plane of FIG. 16 along bezel 116, similar to ribs 70 of stabilizing member 66 illustrated in FIG. 7. It should be understood that, although stabilizing feature 118 is illustrated in FIG. 16 as a series of ribs, any suitable stabilizing feature, including any of the configurations of the various stabilizing members discussed and described above and in FIGS. 5-15, or any other configuration effective to permit an operator to anchor their hand with respect to touch screen display assembly 114 may also be employed.

FIG. 17 is a fragmentary cross-sectional view of a portion of yet another example of a touch screen display assembly 120. Touch screen display assembly at 120 includes a touch sensitive screen 38 and a bezel 122 that frames touch sensitive screen 38 and that mounts touch to instrument panel 22. Bezel 122 is configured to support a position that is spaced apart from instrument panel 22 and to form a recess 124 between underside 126 of bezel 122 and instrument panel 22. Recess 124 provides a space for an operator to wrap their fingers around a bezel 122 and thereby grasp touch screen display assembly 120. This allows an operator to anchor their hand with respect to touch screen display assembly 121 interacting with touch sensitive screen. In some examples, touch sensitive screen 38 may be substantially parallel with respect to instrument panel 22, in which case recess 124 may extend around an entire periphery of bezel 122 making it possible for the operator to grasp touch screen display assembly 120 from any angle. In other examples, it may be desirable to cant touch sensitive screen 38 angle with respect to instrument panel 22. In such a configuration, recessed 124 may extend around only a portion of the periphery of bezel on 22.

While at least one exemplary embodiment has been presented in the foregoing detailed description of the invention, it should be appreciated that a vast number of variations exist. The foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A touch screen display assembly (46) for use in an aircraft cockpit, the touch screen display assembly comprising:
a touch sensitive screen (38) for controlling a system in the aircraft;
a bezel (40) configured to (i) house the touch sensitive screen (38) and (ii) mount the touch sensitive screen to an instrument panel in the aircraft cockpit; and
a stabilizing member (100) substantially framing a periphery of the bezel (40) and disposed proximate the touch sensitive screen (38), the stabilizing member (100) comprising a recessed finger anchor (102), the recessed finger anchor (i) configured to accommodate a single fingertip, and (ii) comprising a fingertip receiving wall (104).

2. The touch screen display assembly (46) of claim 1, wherein
the stabilizing member (100) comprises a first material; the touch sensitive screen (38) comprises a second material; and
wherein the first material has a higher coefficient of static friction than the second material.

3. The touch screen display assembly (46) of claim 2, wherein the stabilizing member (100) comprises rubber.

4. The touch screen display assembly (46) of claim 1, wherein the recessed finger anchor (102) is one of a plurality of recessed finger anchors (102) disposed around the stabilizing member (100).

## Patentansprüche

1. Berührungsbildschirmanzeigebaugruppe (46) zur Verwendung in einem Luftfahrzeugcockpit, wobei die Berührungsbildschirmanzeigebaugruppe Folgendes umfasst:
einen berührungsempfindlichen Bildschirm (38) zum Steuern eines Systems in dem Luftfahrzeug;
eine Einfassung (40), die dazu konfiguriert ist, (i) den berührungsempfindlichen Bildschirm (38) zu beherbergen und (ii) den berührungsempfindlichen Bildschirm an einem Instrumentenfeld in dem Luftfahrzeugcockpit zu montieren; und
ein Stabilisationselement (100), das eine Peripherie der Einfassung (40) im Wesentlichen einrahmt und nahe dem berührungsempfindlichen Bildschirm (38) angeordnet ist, wobei das Stabilisationselement (100) einen vertieften Fingeranker (102) umfasst, wobei der vertiefte Fingeranker (i) zum Aufnehmen einer einzigen Fingerspitze konfiguriert ist und (ii) eine Fingerspitzenempfangswand (104) umfasst.

2. Berührungsbildschirmanzeigebaugruppe (46) nach Anspruch 1, wobei
das Stabilisationselement (100) ein erstes Material umfasst;
der berührungsempfindliche Bildschirm (38) ein zweites Material umfasst; und
wobei das erste Material einen höheren Koeffizienten einer statischen Reibung als das zweite Material aufweist.

3. Berührungsbildschirmanzeigebaugruppe (46) nach Anspruch 2, wobei das Stabilisationselement (100) Gummi umfasst.

4. Berührungsbildschirmanzeigebaugruppe (46) nach Anspruch 1, wobei der vertiefte Fingeranker (102) einer von mehreren vertieften Fingerankern (102) ist, die um das Stabilisationselement (100) herum angeordnet sind.

## Revendications

1. Ensemble d'affichage (46) à écran tactile destiné à être utilisé dans un cockpit d'un aéronef, l'ensemble d'affichage à écran tactile comprenant :
un écran sensible au toucher (38) destiné à commander un système dans l'aéronef ;
une lunette (40) configurée pour (i) abriter l'écran sensible au toucher (38) et (ii) monter l'écran sensible au toucher sur un panneau d'instruments dans le cockpit de l'aéronef ; et
un organe stabilisateur (100) encadrant sensiblement une périphérie de la lunette (40) et disposé à proximité de l'écran sensible au toucher (38), l'organe stabilisateur (100) comprenant un ancrage pour doigt renfoncé (102), l'ancrage pour doigt renfoncé (i) étant configuré pour accueillir un seul bout de doigt et (ii) comprenant une paroi réceptrice de bout de doigt (104).

2. Ensemble d'affichage (46) à écran tactile selon la revendication 1, dans lequel
l'organe stabilisateur (100) comprend un premier matériau ;
l'écran sensible au toucher (38) comprend un deuxième matériau ; et
le premier matériau présentant un coefficient de frottement statique plus élevé que celui du deuxième matériau.

3. Ensemble d'affichage (46) à écran tactile selon la revendication 1, dans lequel l'organe stabilisateur (100) comprend du caoutchouc.

4. Ensemble d'affichage (46) à écran tactile selon la revendication 1, dans lequel l'ancrage pour doigt renfoncé (102) constitue l'un d'une pluralité d'ancrages pour doigt renfoncés (102) disposés autour de l'organe stabilisateur (100).
